# EUROPÄISCHE PATENTSCHRIFT

(11) **EP 3 877 127 B1**
(45) Veröffentlichungstag und Bekanntmachung des Hinweises auf die Patenterteilung: **29.05.2024**
(21) Anmeldenummer: 19800965.6
(22) Anmeldetag: 05.11.2019
(51) Int. Cl.: B29C 49/00, B29B 11/14, B29C 69/00, B29C 49/10, B29C 49/42, B29L 31/00, B29K 67/00, B29K 105/00

(54) **KUNSTSTOFFBEHÄLTER**
PLASTIC CONTAINER
RÉCIPIENT EN PLASTIQUE

(30) Priorität: 09.11.2018 CH 13842018
(43) Veröffentlichungstag der Anmeldung: 15.09.2021
(73) Patentinhaber: ALPLA Werke Alwin Lehner GmbH & Co. KG, 6971 Hard (AT)
(72) Erfinder: SIEGL, Robert, 6850 Dornbirn (AT)
(74) Vertreter: Swisspat Riederer Hasler Patentanwälte AG
(86) Internationale Anmeldenummer: PCT/EP2019/080166
(87) Internationale Veröffentlichungsnummer: WO 2020/094606

(56) Entgegenhaltungen:
- EP-A1- 2 141 075
- JP-A- H0 664 653
- JP-A- H0 699 996
- JP-A- 2002 096 847
- JP-A- 2018 524 439
- KR-A- 20080 033 255

## Beschreibung

### Gebiet der Erfindung

Die Erfindung betrifft einen Kunststoffbehälter der aus einem Preform streckgeblasen ist gemäss Oberbegriff des Anspruchs 1, ein Verfahren zur Herstellung eines aus einem Preform gefertigtem Kunststoffbehälters gemäss Anspruch 10 und die Verwendung eines Coployesters zur Herstellung eins Preforms gemäss Oberbegriff des Anspruchs 20.

### Stand der Technik

Aus dem Stand der Technik sind Tuben und Behälter mit einem integral ausgebildeten Griff (Griffbehälter) bekannt, welche aus Kunststoff hergestellt sind. Zur Herstellung von Tuben oder Griffbehältern muss der Kunststoff schweissbar sein. Deshalb sind Tuben und Griffbehälter oftmals aus HDPE (High Density Polyethylen) hergestellt, da HDPE gut schweissbar ist. Die Barriereeigenschaften von HDPE sind jedoch derart schlecht, insbesondere gegenüber Sauerstoff, dass diese Behälter zur Verpackung von Lebensmitteln meist ungeeignet sind. Durch mehrschichtige Strukturen kann die Barriereeigenschaft von HDPE auf ein für Lebensmittel notwendiges Mass angehoben werden, allerdings sind mehrschichtige Strukturen beim Kunststoffrecycling unerwünscht, weil diese den Recycling-Prozess aufwendig machen bzw. unter Umständen für ein Recycling verunmöglichen.

Bei Tuben wird eine Schweissnaht verwendet, um das dem Tubenkopf abgewandte Ende der Tube zu verschliessen, nachdem die Tube mit Füllgut befüllt wurde. Bei Griffflaschen wird beispielsweise durch Blasformen eine Urform eines Behälters hergestellt. Aus dem blasgeformten Behälter wird eine Durchgriffsöffnung ausgeschnitten bzw. ausgestanzt und die Durchgriffsöffnung wird an ihrem Umfang verschweisst. Dadurch besitzt der Behälter einen Griff mit einer verschweissten und dementsprechend abgedichteten Durchgriffsöffnung.

Wünschenswert wäre es, Tuben und Griffbehälter aus PET (Polyethylenterephtalat) herstellen zu können, da PET Behälter aufgrund der guten Barriereeigenschaft von PET gegenüber Sauerstoff als einschichtiger Behälter hergestellt und im Lebensmittelbereich nutzbar sind. Darüber hinaus können PET-Behälter hoch transparent ausgebildet werden, was oftmals aus gestalterischen Gründen bei Verpackungen gewünscht wird. Behälter aus PET sind meist verstreckt (Bildung einer Streckkristallisation bzw. einer Kristallisation durch Verstrecken), da diese zumeist nach dem Streckblasverfahren aus einem Preform hergestellt werden. Der Streckprozess führt zu einer Teilkristallisation des Materials. Verstrecktes, teilkristallines PET ist jedoch schlecht und demzufolge nicht ausreichend zuverlässig schweissbar. Dies gilt insbesondere für "Standard" PET. Im Rahmen dieser Patentanmeldung soll als "Standard" PET PET mit einer Viskosität zwischen 0,72 und 0,88 dl/ g nach ASTM D4603 und einem Copolymergehalt unter 4 Gew. % (Gewichtsprozent) verstanden werden.

PET Sonderformen, beispielsweise PET mit «long chain branching», sind zwar zur Herstellung von Griffbehältern im Einsatz. Allerdings sind diese PET Sonderformen teuer, eingeschränkt recyclingfähig, nur auf teuren Sondermaschinen weiterverarbeitbar und besitzen nicht immer die benötigten Barriereeigenschaften.

Das verstreckte PET befindet sich bei Raumtemperatur in einer Art eingefrorenen, vorgespanntem Zustand und zieht sich bei Erhitzung über dem Glasübergangspunkt zusammen. Diese Bewegungstendenz erschwert das Verschweissen von verstrecktem PET, da jede Bewegung den Schweissvorgang stört. Die zu verschweissenden Teile müssen daher durch Halteeinrichtungen am Zusammenziehen gehindert werden, um sich nicht zueinander und relativ zu den Schweissstempeln bewegen zu können. Das Zurückhalten der PET Teile führt zu einer "eingefrorenen" Spannung in den Schweissnähten, welche diese schwächt und Ausgangspunkt für Spannungsrisse sein kann.

Eine Wärmebehandlung zwischen dem Glasübergangspunkt (T_{G}) und dem Schmelzpunkt (T_{M}) des PET führt zusätzlich zu unerwünschten weiteren Kristallisationserscheinungen. Kristalline Oberflächen haften schlecht aneinander. Eine Verschweissung von Standard PET zwischen dem T_{G} und dem T_{M} ist nicht ausreichend stark, um den üblichen Belastungen von Tuben oder Griffbehältern Stand zu halten.

Die erwünschten Eigenschaften der Streckkristallisation, welche die verstreckten Bereichen des PET fester, flexibler und widerstandsfähiger macht, wird beim Verschweissen über dem T_{M} vollständig zerstört. Durch das Aufschmelzen über T_{M} wäre eine stabile Schweissverbindung herstellbar, die Verstreckung bzw. die Streckkristallisation und damit die Orientierung der Moleküle wird jedoch aufgehoben. Das bedeutet, dass die Schweißnaht nach der Erhitzung über T_{M} entweder amorph oder sphärolitisch auskristallisiert ist. Für beide Fälle gilt, dass eine Schweißnaht im Bereich eines so auskristallierten PETs brüchiger ist, als eine Schweißnaht aus verstrecktem PET, hergestellt bei einer Temperatur unter T_{M}, und daher für eine flexible Verpackung ungeeignet ist.

In der JP H06 99996 A ist ein Quetschbehälter offenbart, welcher durch Blasformen eines mehrschichtigen Kunststoffvorformlings und Heißsiegeln des unteren Öffnungsendes gebildet wird. Dieser mehrschichtige Vorformling besteht aus einer Olefinharz-Innenschicht und einem im Wesentlichen nichtkristallinen copolymerisierten Polyamid, das durch Kombinieren einer zweibasigen Säurezusammensetzung mit einer Terephthalsäurezusammensetzung und einer Isophthalsäurezusammensetzung gebildet wird. Der Vorformling kann auch ein im Wesentlichen nichtkristalliner Laminatkörper sein, der durch eine Innenschicht aus copolymerisiertem Polyester und eine Zwischenschicht aus Klebeharz gebildet wird. Die inneren Schichten in einem unteren Heißsiegelabschnitt werden miteinander verschweißt, um sie im Wesentlichen nichtkristallin zu halten.

In der EP 2 141 075 A1 ist ein Behälter mit einem Sollbruchabschnitt offenbart, bei welchem das Material des Behälters ein Polyesterharz ist. Die intrinsische Viskosität des Polyesterharzes beträgt etwa 1,0 dl/g, beim direkten Blasformen findet kein Drawdown statt, und der Schmelzpunkt liegt bei etwa 235-245 °C und damit 10-30 °C niedriger als der von normalen Polyesterharzen. Daher ist das Formen bei niedrigen Temperaturen möglich, was zu einer schnellen Abkühlung führt. Darüber hinaus ist die Kristallisationsgeschwindigkeit langsam und die Formbarkeit gut.

Die JP 2002 096847 A beschreibt ein Quetschgefäß, welches durch Blasformen eines mehrschichtigen Vorformlings mit einem heißversiegelten unteren Öffnungsende gebildet ist. Der mehrschichtige Vorformling ist ein Laminat, umfassend eine äußere Olefinharzschicht und eine innere Schicht aus im Wesentlichen amorphem Copolymerpolyester. Der Copolymerpolyester besteht aus einem anderen Diol als Cyclohexanmethanol und einer anderen Dicarbonsäure als Isophthalsäure. Das Diol, besteht aus Ethylenglycol und einem anderen Diol als Ethylenglycol. Der Molprozentsatz von Ethylenglycol zu dem anderem Diol beträgt 50:50 bis 95:5. Das Laminat umfasst auch ein Klebeharz als Zwischenschicht. Der am Boden versiegelte Teil ist im Wesentlichen amorph, wobei die Innenschichten miteinander verbunden sind.

In der KR 2008 0033255 A ist eine Versiegelung offenbart, welche auf einen Ausgiesser eines Behälters aufgesiegelt ist. Wenn der Ausgiesser aus einem Polyesterharz besteht, kann das für die Versiegelungsschicht verwendete Kunstharzmaterial Polyethylenterephthalat oder Polybutylenterephthalat sein, wobei eine mehrwertige Carbonsäurekomponente wie Isophthalsäure oder Adipinsäure und 4-Butandiol oder 1,4-Cyclohexandimethanol bevorzugt wird. Durch Mischen eines nicht kompatiblen Kunstharzmaterials wie Polyethylen oder Polypropylen mit einem solchen Copolyester lässt sich die Dichtungsschicht leicht abziehen.

Aus der JP H06 64653 A ist ein zusammendrückbarer Behälter bekannt, welcher durch Schmelzgießen geformt ist. Die Schmelzmischung enthält ein thermoplastisches Harz und einen Flüssigkristallpolyester. Der Flüssigkristallpolyester weist eine Struktur auf, in der Teilchen in einer kontinuierlichen Phase des thermoplastischen Harzes dispergiert sind.

Die JP 2018 524439 A beschreibt einen opaken blasgeformten Gegenstand, umfassend ein erstes thermoplastisches Material, ein zweites thermoplastisches Material und ein Additiv, ausgewählt aus der Gruppe bestehend aus einem Alkohol, Öl, Siloxanfluid, Wasser und einer Kombination davon. Das erste thermoplastische Material und das zweite thermoplastische Material haben einen Löslichkeitsparameterunterschied von etwa 0,1 cal^{1/2} cm^{-3/2} bis etwa 20 cal^{1/2} cm^{-3/2} und einen Brechungsindexunterschied von etwa 0,1 bis etwa 1,5.

### Aufgabe der Erfindung

Aufgabe der vorliegenden Erfindung ist es daher, streckgeblasene Kunststoffbehälter aus einem Copolyester zu zeigen, welche die Vorteile eines verstreckten Behälters aufweisen und deren Wandungen sich trotzdem durch eine Schweissverbindung verbinden lassen, welche Schweissverbindung den üblichen Belastungen von Kunststoffbehältern Stand halten. Dies gilt insbesondere für Tuben oder Griffbehälter, da bei deren Herstellung zumeist Schweissverbindungen unverzichtbar sind. Zudem soll insbesondere eine Tube geschaffen werden, die zur Abfüllung von Lebensmitteln geeignet ist und trotzdem gut recycelbar ist.

### Beschreibung

Die Lösung der gestellten Aufgabe gelingt bei einem Kunststoffbehälter, der aus einem Preform streckgeblasen ist durch die im kennzeichnenden Abschnitt des Patentanspruchs 1 angeführten Merkmale, und ein entsprechendes Verfahren nach Anspruch 10 und die Verwendung nach Anspruch 20.

Weiterbildungen und/oder vorteilhafte Ausführungsvarianten sind Gegenstand der abhängigen Patentansprüche.

Die Erfindung zeichnet sich dadurch aus, dass der Behälter aus einem Copolyester hergestellt ist, die Wandung des verstreckten Behälterkörpers im Bereich der wenigstens einen Schweissnaht ein Streckverhältnis gegenüber der Wandung des unverstreckten Behälterhalses von mehr als 6:1 aufweist und der verstreckte Behälterkörper eine Dichteerhöhung nach erfolgter Verschweißung gegenüber dem unverstreckten Behälterhals von weniger als 0,06 g/cm³ im Bereich der wenigstens einen Schweissnaht aufweist. Im Rahmen dieser Anmeldung soll unter Verstreckung die biaxiale Expansion der Oberfläche der Wandung des Preforms hin zur Oberfläche der Wandung des Behälterkörpers verstanden werden.

Im Rahmen diese Anmeldung soll unter einer Schweissverbindung bzw. einer Schweissnaht eine Verbindung verstanden werden, welche Oberflächen unlösbar und unter Anwendung von Wärme und Druck miteinander verbindet.

Die Erfindung ermöglicht es, dass sich Öffnungen an einem aus einem Preform streckgeblasener Kunststoffbehälter mit einer Schweissnaht überraschend gut und fest verbinden lassen, indem bestimmte Eigenschaften des Herstellungsmaterials, ein bestimmtes Streckungsverhältnis im Bereich der Schweissnaht und eine bestimmte Dichteerhöhung im Bereich der Schweissnaht erfüllt werden. Dadurch, dass die Dichteerhöhung des verstreckten Behälterkörpers im Bereich der Schweissnaht unter 0,06 g/cm³ bleibt, bleibt die Kristallisation unter 40%. Die Dichte steigt proportional mit der Kristallisation und kann daher als ein Mass für die Kristallisation herangezogen werden. Die Dichterhöhung bzw. die Erhöhung der Kristallisation erfolgt durch das Verstrecken des Preforms und zusätzlich durch die sphärolitische Kristallisation beim Verschweissen bzw. bei der Herstellung der Schweissnaht. Bei Einhaltung der beanspruchten Dichteerhöhung ist die Schweissnaht ausreichend flexibel und nicht brüchig. Das hohe beanspruchte Vertreckungsverhältnis führt zu keiner brüchigen Schweissnaht, wenn das Mass der Kristallisation, hervorgerufen durch das Strecken, nicht zu hoch wird. Ein hohes Verstreckungsverhältnis ist anzustreben, um einen stabilen Kunststoffbehälter zu erhalten. Das Material des Behälterkörpers ist gut schweissbar und die Schweissnaht besteht typische Belastungstests zur Überprüfung der Flexibilität und Stabilität. Der aus Copolyester hergestellte Kunststoffbehälter benötigt keine weiteren Barriereschichten, um eine ausreichende Sauerstoffbarriere zu besitzen. Der Behälter ist daher gut recycelbar, da er aus einem sortenreinen Copolyester besteht.

In einer besonders bevorzugten Ausführungsform der Erfindung ist der Copolyester Polyethylenterephtalat (PET) mit einem Copolymergehalt zwischen 4 Gew% und 10 Gew%, wobei das Copolymer Isophthalsäure, Diethylenglycol, Furandicarbonsäure, Propylenglycol oder Butylenglycol ist. Durch den Anteil des Copolymergehalts zwischen 4 Gew% und 10 Gew% lässt sich das Mass der Kristallisation unter 20% halten, obwohl das Streckverhältnis mit mehr als 6:1 sehr hoch ist. Der Behälter besitzt die gute Sauerstoffbarriere des PET, kann transparent sein, ist sortenrein recycelbar und dessen Material lässt sich gut verschweissen. Das Material lässt sich sehr gut unterhalb des Schmelzpunktes verschweissen, wodurch die durch das Strecken erhaltene Orientierung des PETs im Bereich der Schweissnaht während des Schweissens nicht verloren geht.

In einer weiteren besonders bevorzugten Ausführungsform der Erfindung ist der Copolyester Polyethylenfuranoat (PEF) mit einem Copolymergehalt unter 5 Gew%, wobei das Copolymer Terephthalsäure, Isophthalsäure, Diethylenglycol, Propylenglycol, Spiroglycol oder Butylenglycol ist. Bei PEF hat es sich herausgestellt, dass auch ein Copolymergehalt von weniger als 5 Gew% möglich ist, da PEF langsam kristallisiert. Deshalb ist eine Kristallisation von unter 20% bei PEF mit einem reduzierten Polymergehalt möglich, obwohl das Streckverhältnis mehr als 6:1 beträgt. Der Behälter besitzt alle Vorteile des PEF, insbesondere die gute Rezyklierbarkeit und die die Möglichkeit der Herstellung aus nachwachsenden Rohstoffen. Zusätzlich lässt sich das Material des Behälters unter dem Schmelzpunkt sehr gut verschweissen.

Als vorteilhaft erweist es sich, wenn der verstreckte Behälterkörper eine Dichteerhöhung vor der Verschweißung gegenüber dem unverstreckten Behälterhals von weniger als 0,03 g/cm³ im Bereich der wenigstens einen Schweissnaht aufweist. Die beanspruchte Dichterhöhung entspricht einer Kristallisation von unter 20%. Bei einer Dichterhöhung von weniger als 0,03 g/cm³ lässt sich der Copolyester sehr gut unter dem Schmelzpunkt verschweissen. Die kontrollierte Dichterhöhung lässt sich durch den Copolymergehalt, insbesondere den Copolymergehalt von PET oder PEF, steuern.

Festzuhalten ist, dass eine eindeutige Bestimmung des Kristallisationsgrades schwierig ist und von der gewählten Messmethode abhängt. Die gängigsten Methoden zur Bestimmung des Kristallisationsgrades bei Polymeren sind die Dichtemessung, die Kalorimetrie (DSC), die Röntgenbeugung, die Infrarotspektroskopie oder die Kernresonanzspektroskopie. Daher soll für die Zwecke dieser Anmeldung gelten, dass eine Dichteerhöhung von 0,03 g/cm³ einem Kristallisationsgrad von 20% entspricht und dass eine Dichteerhöhung von 0,06 g/cm³ einem Kristallisationsgrad von 40% entspricht.

Die Erfindung zeichnet sich auch bevorzugt dadurch aus, dass der Behälter eine Tube mit einem Tubenhals und einem dem Tubenhals gegenüberliegenden Tubenende ist, wobei die Austrittsöffnung im Bereich des Tubenhalses und die zweite Öffnung im Bereich des Tubenendes angeordnet ist und die zweite Öffnung durch die Schweissnaht versiegelt ist. Die Erfindung ermöglicht es, dass eine Tube aus einem PET oder PEF basierten Copolyester herstellbar ist und trotzdem eine stabile Schweissnaht aufweist, welche die üblichen Belastungstests besteht. Die Tube ist für die Verpackung von Lebensmitteln geeignet, da PET oder PEF eine gute Sauerstoffbarriere besitzen und ist sehr gut recyclebar, da das PET oder das PEF sortenrein ist und das Tubenmaterial frei ist von einer weiteren Barriereschicht.

In einer weiteren bevorzugten Ausführungsform der Erfindung hat der Behälter einen integralen Griff mit einer Durchgriffsöffnung ausgebildet, wobei die Schweissnaht die Durchgriffsöffnung begrenzt, indem sie ein erstes und zweites an die Durchgriffsöffnung angrenzendes Wandende verbindet. Die Erfindung ermöglicht es einen Griffbehälter aus einem bevorzugt PET oder PEF basierten Copolyester herzustellen, welcher eine stabile und dichte Schweissnaht rund um die Durchgriffsöffnung besitzt. Der Griffbehälter ist für die Verpackung von Lebensmitteln, beispielsweise Milch oder Fruchtsaft geeignet, da PET oder PEF eine gute Sauerstoffbarriere besitzen und ist sehr gut recyclebar, da das PET oder das PEF sortenrein ist und das Behältermaterial frei ist von einer weiteren Barriereschicht.

Möglich ist es auch, dass der Kunststoffbehälter und insbesondere der Griffbehälter transparent ist und dadurch der Füllstand jederzeit erkennbar ist.

Zweckmässigerweise hält die Schweissnaht bei einer Länge von 5 mm einer Zugkraft von wenigstens 100 N stand, wobei die Zugkraft im Wesentlichen senkrecht zur Schweissnaht orientiert ist. Diese Festigkeit der Schweissnaht ermöglicht es, dass die Schweissnaht ausreichend stabil ist, um insbesondere bei Tuben oder Griffbehältern eine Öffnung zu verschliessen und abzudichten. Die Schweissnaht ist mechanisch belastbar und wird während dem Einsatz des Behälters weder brüchig noch undicht.

Die Erfindung zeichnet sich auch bevorzugt dadurch aus, dass der Behälter für einen vereinfachten Recycling Prozess einschichtig ausgebildet ist. Da PET oder PEF eine gute Sauerstoffbarriere aufweist, ist der Behälter bevorzugt frei von weiteren Schichten, welche als Barriereschichten oder -lagen dienen. Der Behälter ist sortenrein und ist als solcher vereinfacht recyclebar.

Zweckmässigerweise ist das PET oder das PEF zur Herstellung des Behälters zu einem Anteil von wenigstens 30% biobasiert hergestellt ist. Dadurch lässt sich der Kunststoffbehälter wenigstens zu einem Teil aus nachwachsenden Rohstoffen herstellen. Für die Herstellung unter Verwendung von PEF kann dies beispielsweise Fructose oder Glucose sein. Alternativ ist auch ein Anteil von wenigstens 30% Regenerat möglich.

In einer weiteren bevorzugten Ausführungsform der Erfindung ist die zweite Öffnung des Behälters unter Bildung einer Schweißnaht in einem Temperaturbereich, welcher über der Glastemperatur (T_{G}) und unter der Schmelztemperatur (T_{M}) des Copolymers liegt, verschlossen. Die Wahl der Schweisstemperatur in diesem Temperaturbereich führt zu einer Schweissnaht, welche ausreichend stabil ist, da die Dichte der Wandung im Bereich der Schweissnaht vor der Verschweissung unter 0,03 g/cm³ liegt und dadurch nicht zu stark kristallin ausgebildet ist. Eine Schweisstemperatur über T_{M} kann vermieden werden, was den grossen Vorteil mit sich bringt, dass die durch die Streckung erzielten Materialeigenschaften nicht verloren gehen. Zudem kühlt die Schweißnaht nach der Erhitzung über T_{M} entweder amorph oder sphärolitisch aus. Für beide Fälle gilt, dass so auskristallisiertes PET brüchiger ist als verstrecktes PET und daher für eine flexible Verpackung ungeeignet ist.

Ein weiterer Aspekt der Erfindung betrifft ein Verfahren zur Herstellung eines aus einem Preform gefertigtem Kunststoffbehälters, wobei der Preform aus Copolyester hergestellt ist und in einem Streckblasverfahren verstreckt wird. Das Verfahren weist die folgenden Herstellschritte auf:
- Streckblasen des Preforms, wobei wenigstens in dem Bereich in dem eine Schweissnaht hergestellt wird, Wandungen des Preforms jeweils um wenigstens das 6 fache gegenüber dem unverstreckten Zustand vergrössert werden und die Dichte der Wandungen im verstreckten Bereich um höchstens 0,03 g/cm³ vergrössert wird,
- Aneinanderpressen der verstreckten Wandungen und
- Verschweissen der Wandungen unter Bildung der Schweissnaht bei einer Schweisstemperatur zwischen der Glasübergangstemperatur und der Schmelztemperatur des Copolyesters. Durch Einhaltung der Dichteerhöhung unter 0,03 g/cm³ und einer Schweisstemperatur zwischen T_{G} und T_{M} lässt sich eine stabile Schweissnaht herstellen, selbst bei einem Streckverhältnis von mehr als 6:1.

Dadurch, dass durch die Verschweissung die Dichte der Wandungen im Bereich der Schweißnaht um höchstens 0,06 g/cm³ vergrössert wird, ist gewährleistet, dass die Schweissnaht nicht brüchig oder spröde ist. Die Schweissparameter wie Temperatur, Haltedauer, Aufheizgeschwindigkeit und Abkühlgeschwindigkeit sind daher so zu wählen, dass die beanspruchte Dichterhöhung im Bereich der Schweissnaht nicht überschritten wird.

Als vorteilhaft hat es sich erwiesen, wenn an dem Behälter ein integraler Griff mit einer Durchgriffsöffnung ausgebildet wird und wenn die Schweissnaht die Durchgriffsöffnung begrenzt, indem die Schweissnaht die an die Durchgriffsöffnung angrenzenden Wandungen miteinander verbindet. Dadurch lässt sich aus einem Copolyester, welcher bevorzugt PET oder PEF basiert ist, ein Griffbehälter herstellen. Der Griffbehälter lässt sich für die Abfüllung von Lebensmitteln nutzen, da er eine ausreichende Sauerstoffbarriere besitzt.

In einer weiteren bevorzugten Ausführungsform der Erfindung wird vor dem Aneinanderpressen und Verschweissen ein Teil des Behälters abgetrennt bzw. abgeschnitten, wodurch eine Öffnung entsteht und diese Öffnung wird unter Bildung der Schweissnaht bei einer Schweisstemperatur zwischen der Glasübergangstemperatur und der Schmelztemperatur des Copolyesters verschlossen. Dadurch lässt sich der Behälter durch die Öffnung befüllen und kann nach der Befüllung durch die Schweissnaht verschlossen werden. Auch lassen sich andere Öffnungen, welche dem Durchgreifen oder Halten des Behälters dienen, an ihrem Umfang verschweissen, wodurch der Behälter nach Ausschneiden der Öffnung wieder abgedichtet wird.

Als vorteilhaft erweist es sich, wenn dass die Schweisszeit, bei welcher die Wandungen auf Schweisstemperatur gehalten werden, zwischen 1 und 6 sec beträgt. Dadurch werden die Wandungen ausreichend lange erhitzt, um fest aneinander zu haften und um eine ausreichend stabile und flexible Schweissnaht herzustellen.

Bevorzugt ist es, wenn die Wandungen zwischen einer ersten und einer zweiten Schweissbacke miteinander verschweisst werden, wobei der Anpressdruck auf die Wandungenzwischen 50 und 50000 N/cm2 beträgt. Durch diesen Bereich des Anpressdruckes kann eine ausreichend feste Haftung zwischen den Wandungen hergestellt werden, wobei eine die Schweissnaht schwächende Dichterhöhung vermieden wird.

Ein weiterer Parameter den Schweissvorgang betreffend ist, dass die Schweissbacken bevorzugt bei einer Abkühltemperatur geöffnet werden, welche Abkühltemperatur unter der Glasübergangstemperatur liegt. Gemäss dem Stand der Technik ist es bis jetzt nicht gelungen, eine ausreichend feste Schweissnaht zur Verbindung von Wandungen eines solchen Behälters herzustellen.

Bevorzugt ist es, wenn das Copolyesters Polyethylenterephtalat (PET) mit einem Copolymergehalt zwischen 4 Gew% und 10 Gew% ist. Durch diese Zusammensetzung kann bei einem PET basierten Copolyester die Dichterhöhung nach der Streckung unter 0,03 g/cm³ gehalten werden bzw. die Kristallisation unter 20% gehalten werden, obwohl die Wandung um mehr als das 6 fache gegenüber dem unverstreckten Zustand gestreckt wird. Diese Parameter führen dazu, dass die verschweissten Wandungen ausreichend fest aneinander haften.

Bevorzugt ist es, wenn das Copolyesters Polyethylenfuranoat (PEF) mit einem Copolymergehalt unter 5 Gew% ist. Durch diese Zusammensetzung kann bei einem PEF basierten Copolyester die Dichterhöhung nach der Streckung unter 0,03 g/cm³ gehalten werden bzw. die Kristallisation unter 20% gehalten werden, obwohl die Wandung um mehr als das 6 fache gegenüber dem unverstreckten Zustand gestreckt wird. Diese Parameter führen dazu, dass die verschweissten Wandungen ausreichend fest aneinander haften.

Mit Vorteil wird zur Herstellung einer Tube der Preform in einer entsprechenden Blasform streckgeblasen, nach der Entformung das dem Tubenhals gegenüberliegende geschlossene Tubenende abgeschnitten, die Tube optional durch die beim Abschneiden des Tubenendes entstehende zweite Öffnung mit Füllgut befüllt und die zweite Öffnung durch Schweißen verschlossen. Dadurch wird in überraschender Weise die Herstellung einer Tube ermöglicht, obwohl deren Öffnung gemäss dem Stand der Technik nicht verschweissbar ist, da die Tube in einem Standardverfahren streckgeblasen ist und aus einem Copolyester, bevorzugt PET oder PEF basiert, hergestellt ist. Die Tube ist zur Abfüllung von Lebensmitteln geeignet, da sie eine ausreichende Sauerstoffbarriere aufweist und lässt sich sortenrein recyclen, da sie frei von zusätzlichen Barriereschichten ist.

Ein weiterer Aspekt der Erfindung betrifft ein Verfahren zur Herstellung einer Verbindung zwischen gestreckten Wandungen eines aus Copolyester hergestellten Kunststoffbehälters oder von aus Copolyester hergestellten Kunstoffbehältern gemäss der obigen Beschreibung. Die oben beschriebenen Parameter, welche das Verschweissen der Wandungen betreffen und die oben beschriebenen Eigenschaften den Behälter bzw. den Copolyester betreffend ermöglichen die Herstellung einer ausreichend stabilen Schweissnaht zur Verbindung der gestreckten Wandungen.

Noch ein Aspekt der Erfindung betrifft die Verwendung eines Copolyesters zur Herstellung eines Preforms, um aus diesem Preform einen Behälter in einem Streckblasverfahren zu fertigen, wobei der Behälter einen Behälterkörper und einen daran anschließenden Behälterhals mit einer Austrittsöffnung aufweist und wobei der Behälter eine durch eine Schweissnaht verschlossene zweite Öffnung aufweist.

Die Erfindung zeichnet sich dadurch aus, dass das Copolyesters Polyethylenterephtalat (PET) mit einem Copolymergehalt zwischen 4 Gew% und 10 Gew% ist oder dass das Copolyesters Polyethylenfuranoat (PEF) mit einem Copolymergehalt unter 5 Gew% ist. Diese Zusammensetzungen des Copolyesters ermöglichen es, dass die Dichterhöhung nach dem erfolgten Streckblasverfahren unter 0,03 g/cm3 bleibt, wodurch die Kristallisation gering gehalten werden kann und die Wandungen dementsprechend gut miteinander verschweissbar sind.

In einer besonders bevorzugten Ausführungsform der Erfindung weist die Oberfläche des Behälters im Bereich der wenigstens einen Schweissnaht gegenüber der Oberfläche des Preforms ein Streckverhältnis von mehr als 6:1 auf und der Behälterkörper weist nach dem Verschweissen eine Dichteerhöhung gegenüber dem Preformkörper von weniger als 0,06 g/cm³ im Bereich der wenigstens einen Schweissnaht auf. Diese geringe Dichteerhöhung führt dazu, dass die Kristallisation im Bereich der Schweissnaht unter 40% bleibt und die Schweissnaht nicht spröde oder brüchig ist, sondern die zweite Öffnung ausreichend dicht und fest verschliesst.

In einer weiteren bevorzugten Ausführungsform der Erfindung ist der Copolyester Polyethylenterephtalat (PET) mit einem Copolymergehalt zwischen 4 Gew% und 10 Gew%, wobei das Copolymer Isophthalsäure, Diethylenglycol, Furandicarbonsäure, Propylenglycol oder Butylenglycol ist.

In einer weiteren bevorzugten Ausführungsform der Erfindung ist der Copolyester Polyethylenfuranoat (PEF) mit einem Copolymergehalt unter 5 Gew%, wobei das Copolymer Terephthalsäure, Isophthalsäure oder Diethylenglycol, Propylenglycol, Spiroglycol oder Butylenglycol ist.

Die Wahl des Copolymers kann dazu eingesetzt werden, dass der Behälter bestimmte für seine Verwendung benötigte Materialeigenschaften besitzt. Die Wandungen des Behälters bleiben verschweissbar, indem der beanspruchte Copolymergehalt eingehalten wird.

Weitere Vorteile und Merkmale ergeben sich aus der nachfolgenden Beschreibung von zwei Ausführungsbeispielen der Erfindung unter Bezugnahme auf die schematischen Darstellungen. Es zeigen in nicht massstabsgetreuer Darstellung:
- Figur 1:: 4 Verfahrensstufen der Herstellung einer Tube aus einem Preform;
- Figur 2:: eine Darstellung der Herstellung eines Kunststoffbehälters mit Griff aus einem Preform;
- Figur 3:: eine Darstellung einer ersten Probenart zur Feststellung der Zugfestigkeit einer Schweissnaht an einem Kunststoffbehälter und
- Figur 4:: eine Darstellung einer zweiten Probenart zur Feststellung der Zugfestigkeit einer Schweissnaht an einem Kunststoffbehälter.

Die vorliegende Erfindung betrifft einen Kunststoffbehälter. Der Kunststoffbehälter ist bevorzugt eine Tube 11 oder ein Behälter (Griffbehälter 13) mit einem integral ausgebildeten Griff 15. Der Behälter weist wenigstens eine Schweissnaht 17 auf und ist aus einem Preform 19 streckgeblasen. Der Kunststoffbehälter (Tube 11, Griffbehälter 13) umfasst einen Behälterkörper 21 und einen an den Behälterkörper 21 anschliessenden Behälterhals 23. Der Behälterkörper 21 besitzt eine Wand 25, welche einen Hohlraum 27 umschliesst. Der Behälterhals umschliesst eine Austrittsöffnung 29. Durch die Austrittsöffnung 29 kann das in dem Kunststoffbehälter abgefüllte Füllgut entnommen werden.

Die Erfindung ermöglicht es in überraschender Weise, dass ein erstes und ein zweites Wandende 39a,39b bzw. eine zweite Öffnung 40 des Behälters ausreichend fest verschweissbar sind, sodass die Schweissnaht 17 die vorgeschriebenen Festigkeitstests besteht. Dies obwohl der Behälter nach einem Standard-Streckblasprozess aus einem Preform 19 hergestellt ist und aus einem Copolyester besteht. Dadurch lässt sich aus einem Preform, der bevorzugt aus PET oder PEF besteht, eine Tube 11 oder ein Griffbehälter 13 streckblasen, deren Wandenden verschweisst werden müssen bzw. eine zweite Öffnung verschweisst werden muss.

Bei dem Standard-Streckprozess wird der Preform 19 in eine Blasform 31 eingesetzt, wobei der Behälterhals 23 ausserhalb der Blasform 31 verbleibt. Der Preform 19 weist einen Preformkörper 20 und einen Preformhals 22 auf. Der Preform wird zumeist vor dem Einsetzen in die Blasform 31 auf die notwendige Verarbeitungstemperatur erwärmt. Durch die Austrittsöffnung 29 wird eine Blaslanze in den Preform 19 eingefahren, welche den Preform 19 in axialer Richtung um ein bestimmtes Mass verstreckt. Dann wird der Preform mit einem Gas, welches über die Blaslanze eingeblasen wird, aufgeblasen und weiter radial und axial verstreckt, bis die Wand 25 an der Blasform 31 anliegt. Nach Abkühlen des hergestellten Behälters kann dieser aus der Blasform 31 entnommen werden. Der Behälterhals 31 kann auch ein Aussengewinde 33 aufweisen, wodurch auf den Behälterhals 23 eine Verschlusskappe mit einem korrespondierenden Innengewinde aufschraubbar ist.

Um die Wandenden 39a,39b durch eine Schweissnaht 17 verbinden zu können bzw. die zweite Öffnung 40 durch die Schweissnaht 17 verschliessen zu können, muss das streckgeblasene Material des Behälters bestimmte Eigenschaften aufweisen. Ansonsten kann die Schweissnaht 17 die Festigkeitsanforderungen nicht erfüllen, welche insbesondere an einen Behälter gestellt werden, in dem Lebensmittel abgefüllt sind.

Das erste und das zweite Wandende sind zwischen der Glasübergangstemperatur T_{G} und der Schmelztemperatur T_{M} des Copolyesters verschweissbar. Unterhalb der Glasübergangstemperatur lassen sich keine Schweissverbindungen herstellen, da diese Temperaturen zu niedrig sind. Oberhalb der Schmelztemperatur gehen die Festigkeitseigenschaften, welche durch die Verstreckung des Preforms 19 erreicht wurden, verloren. Dazu zählt die verlorene Streckkristallisation. Zudem kühlt die Schweißnaht 17 nach der Erhitzung über T_{M} entweder amorph oder sphärolitisch kristallisiert aus. Für beide Fälle gilt, dass so auskristallisiertes PET brüchiger ist, als verstrecktes PET und daher für eine flexible Verpackung ungeeignet ist. Unter der Streckkristallisation ist zu verstehen, dass die Verstreckung Moleküle so nahe aneinander führen kann, dass diese intermolekulare Wechselwirkungen zueinander aufbauen können. Diese Wechselwirkungen begründen eine Haftung zwischen den Molekülen, welche den Behälter fester, flexibler und belastungsfähiger machen. Oberhalb der Glasübergangstemperatur ist eine Verschweissung von Copolyestern möglich, da sich zufolge der entstandenen Kettenmobilität in diesem Temperaturbereich Molekülverschlaufungen oder Anhaftungen mit Molekülen zwischen den teilkristallinen Zonen ausbilden können.

Die Verschweissung des Copolyesters im oben beschriebenen Temeraturbereich führt zu einer ausreichend festen Schweissnaht 17, wenn die Wandung des Behälterkörpers wenigstens um das 6 fache gegenüber der Wandung des Preformkörpers 20 verstreckt wird. Es versteht sich, dass dieses Verstreckungsverhältnis insbesondere im Bereich der Schweissnaht 17 vorhanden sein muss.

Damit die Schweissnaht 17 nach dem Abkühlen eine ausreichende Stabilität besitzt, darf die Streckkristallisation im Bereich der Schweissnaht 17 vor der Verschweissung nicht über 20 % liegen. In Kombination mit weiter unten definierten Schweissbedingungen, kann verhindert werden, dass das Material der Schweissnaht eine Kristallisation von mehr als 40 % aufweist und nicht brüchig ist. Dies kann dadurch erreicht werden, dass der Anteil an Copolymere in dem Copolyester einen bestimmten Wert besitzt. Bei PET hat sich herausgestellt, dass der Anteil der Copolymere zwischen 4 Gew% und 10 Gew% besonders geeignet ist, um die Kristallisation (den Kristallisationsgrad) gering zu halten. Bei PEF ist der Anteil von weniger als 5 Gew% Copolymeren besonders geeignet.

Da die Kristallisation von 0 % und 100 % idealisiert ist, werden im Rahmen dieser Anmeldung anstatt der Kristallisation Werte für die Dichteerhöhung anstatt der Kristallisation angeführt, da eine erhöhte Kristallisation mit einer erhöhten Dichte einhergeht. Dabei wird die Dichte des Preformkörpers 20 mit der Dichte des Behälterkörpers 21 bzw. des unverstreckten Behälterhalses 23 verglichen. Eine Kristallisation von 20 % entspricht einer Dichteerhöhung des Behälterkörpers von 0,03 g/cm³ gegenüber dem Preformkörper 20 bzw. dem unverstreckten Behälterhals 23. D.h. die Dichte des Behälterkörpers 21 ohne dem Behälterhals 23 hat um 0,03 g/cm³ gegenüber der Dichte des Preformkörpers 20 ohne dem Preformhals 23 zugenommen. Einer Kristallisation von 40 %, welche von dem Material der Schweissnaht unterschritten wird, entspricht einer Dichteerhöhung gegenüber dem Preformkörper 20 bzw. dem unverstreckten Behälterhals 23 von 0,06 g/cm³.

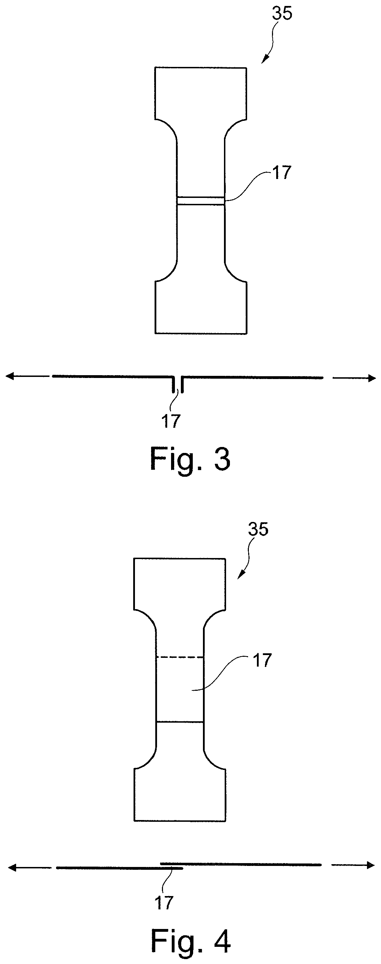

Zur Bestimmung der optimalen Schweissbedingungen, um eine haltbare und nicht brüchige Schweissnaht 17 herzustellen, werden aus der Wandung 25 des verstreckten Behälterkörper 21 Wandproben 35 ausgeschnitten. Die Probe 35 besitzt an ihren gegenüberliegenden Enden eine Breite von 12 mm. In der Mitte der Probe 35 verjüngt sich die Breite auf 5mm. Die Probe 35 besitzt daher eine Art Knochenform. In der Mitte der Probe wird diese quer zur Längserstreckung auseinander geschnitten. Die beiden entstehenden Probenteile werden mit einer Schweissnaht 17 wieder verbunden. Die Parameter zur Herstellung der Schweissnaht werden variiert, um die Festigkeit der Schweissnaht 17 zu optimieren. Neben der Dauer der Schweisszeit tₛ, der Höhe der Schweisstemperatur Tₛ und der Abkühltemperatur Tc wird auch die Art der Schweissnaht variiert. In der Figur 3 ist eine stossförmige Schweissnaht 17 gezeigt, wobei in der Figur 4 eine überlappende Schweissnaht 17 gezeigt ist. Die stossförmige Schweissnaht besitzt eine maximale Schälbelastung und die überlappende Schweissnaht besitzt eine maximale Scherbelastung.

Nach Herstellung der Schweissnaht 17 wird die Wandprobe 35 einem Zugversuch unterzogen, wobei die Enden in eine Zugvorrichtung eingespannt werden. Die Schweissnaht ist dabei 90 Grad +/- 5 Grad zur Zugrichtung orientiert. Sowohl die stossförmige als auch die überlappende Schweissnaht 17 sind ausreichend fest, wenn diese 100 N Zugkraft ertragen. Die Zugkraft wurde mit einer Längsgeschwindigkeit von 100 mm/min von der Zugvorrichtung auf die Wandprobe aufgebracht.

Wie bereits weiter oben ausgeführt, führt eine Schweisstemperatur Ts zu einer ausreichenden Festigkeit der Schweissnaht 17, welche sich zwischen der Glasübergangstemperatur Tc und der Schmelztemperatur T_{M} befindet. Für copolymeres PET liegt dieser Temperaturbereich zwischen 170 °C und 220 °C. Für PEF und copolymeres PEF liegt dieser Temperaturbereich zwischen 120 °C und 210 °C. Die Siegelzeit ts, bei welcher die Schweissbacken mit der Siegeltemperatur Ts das erste und das zweite Wandende verschweissten, stellt sich mit 3 s als optimal heraus. Die Abkühltemperatur Tc, bei welcher die Schweissbacken wieder geöffnet wurden, befindet sich unter Tc. Die Anpresskraft der Schweissbacken auf das erste und zweite Wandende beträgt bevorzugt zwischen 50 bis 50000 N/cm².

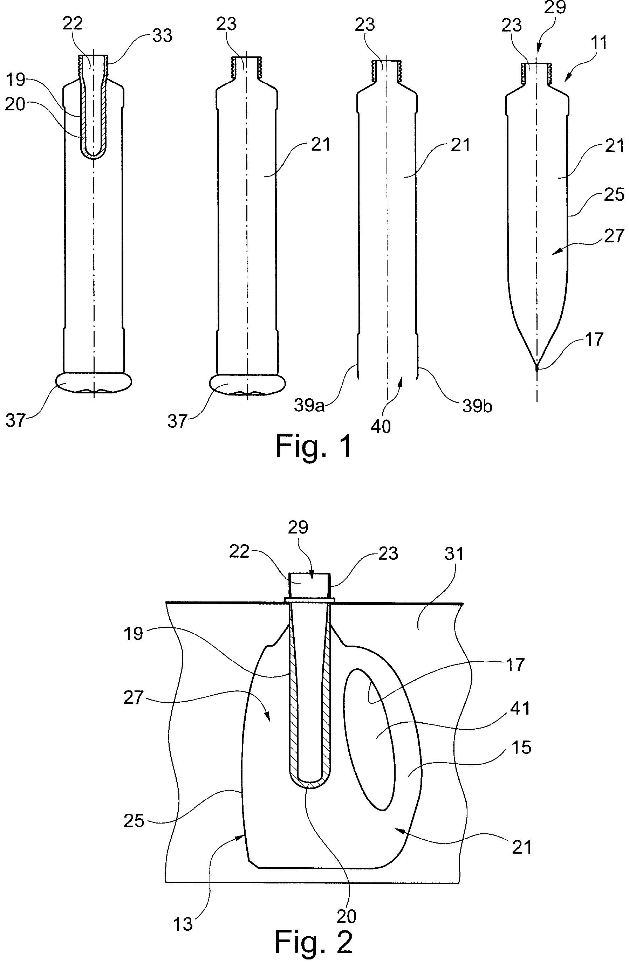

In der Figur 1 ist die Herstellung der Tube 11 aus dem Preform 19 dargestellt. Der Preform wird in die Blasform eingesetzt, wobei der Preformhals 22 ausserhalb der Blasform verbleibt. Nach Verstrecken, aufblasen und Entnahme des hergestellten Kunststoffbehälters, wie weiter oben bereits beschrieben, besitzt der Behälter einen Boden bzw. ein Tubenende 37, welches nicht mehr benötigt wird. Das Tubenende 37 wird abgeschnitten und kann daher auch als "verlorenes" Tubenende verstanden werden. Dabei bilden sich ein erstes und zweites Wandende 39a,39b, welche durch die Schweissnaht 17 miteinander dauerhaft zu verbinden sind bzw. die zweite Öffnung 40 ist durch die Schweissnaht 17 zu verschliessen. Typischerweise kann die Tube 11 vor dem Verschliessen durch die Schweissnaht 17 mit Füllgut befüllt werden. Das verlorene Tubenende wird in der Regel innerbetrieblich recylcelt.

Die Schweissnaht 17 wird gemäss den obigen Schweissparametern hergestellt. Belastungstests haben ergeben, dass die Schweissnaht 17 einen Fall der Tube 11 auf die Schweissnaht aus einer Höhe von 2 m erträgt. Nach einem 20maligen Abbiegen der Schweissnaht 17 über ein Rohr mit einem Durchmesser von 30 mm ist die Schweissnaht 17 immer noch dicht. Auch ein Abknicken der Schweissnaht führt zu keiner Undichtigkeit der Schweissnaht. Eine derartige Tube 11 erfüllt daher die Belastungsanforderungen, welche Tuben des Stands der Technik erfüllen müssen.

In der Figur 2 ist die Herstellung des Griffbehälters 13 aus dem Preform 19 gezeigt. Nach Herstellung eines Behälters nach dem Standard-Streckblasprozess, wie weiter oben beschrieben, wird in den Behälter eine Durchgriffsöffnung 41 geschnitten oder gestanzt. Dabei entstehen ein erstes und zweites Wandende, welche die Durchgriffsöffnung umgeben bzw. eine zweite Öffnung. Um den Griffbehälter entlang der Durchgriffsöffnung wieder abzudichten, müssen das erste und das zweite Wandende miteinander unter Bildung der Schweissnaht 17 miteinander verschweisst werden bzw. die zweite Öffnung muss verschlossen werden. Damit die Schweissnaht 17 ausreichend stabil ist, wird diese unter Einhaltung der oben beschriebenen Schweissparameter hergestellt.

### Legende:

- 11: Kunststoffbehälter, Tube
- 13: Kunststoffbehälter, Griffbehälter
- 15: Griff
- 17: Schweissnaht
- 19: Preform
- 20: Preformkörper
- 21: Behälterkörper
- 22: Preformhals
- 23: Behälterhals, Tubenhals
- 25: Wandung des Behälters
- 27: Hohlraum
- 29: Austrittsöffnung
- 31: Blasform
- 33: Aussengewinde
- 35: Wandprobe
- 37: Boden, Tubenende
- 39a, 39b: Erstes und zweites Wandende
- 40: Zweite Öffnung
- 41: Durchgriffsöffnung

## Patentansprüche

1. Kunststoffbehälter (11,13) der aus einem Preform (19) streckgeblasen ist und einen Behälterkörper (21) mit einem daran anschliessenden Behälterhals (23) aufweist, an welchem Behälterhals (23) eine Austrittsöffnung (29) vorgesehen ist, wobei der Behälterkörper (21) eine zweite durch eine Schweißnaht (17) verschlossene Öffnung (40) aufweist, wobei
der Behälter (11,13) aus einem Copolyester hergestellt ist,
die Wandung (25) des verstreckten Behälterkörpers (21) im Bereich der wenigstens einen Schweissnaht (17) ein Streckverhältnis gegenüber der Wandung des unverstreckten Behälterhalses (23) von mehr als 6:1 aufweist und
der verstreckte Behälterkörper (21) eine Dichteerhöhung nach erfolgter Verschweißung gegenüber dem unverstreckten Behälterhals (23) von weniger als 0,06 g/cm³ im Bereich der wenigstens einen Schweissnaht (17) aufweist,
**dadurch gekennzeichnet,**
**dass** der Copolyester Polyethylenterephtalat (PET) mit einem Copolymergehalt zwischen 4 Gew% und 10 Gew% ist oder
**dass** der Copolyester Polyethylenfuranoat (PEF) mit einem Copolymergehalt unter 5 Gew% ist.

2. Behälter nach Anspruch 1, **dadurch gekennzeichnet, dass** das Copolymer Isophthalsäure, Diethylenglycol, Furandicarbonsäure, Propylenglycol oder Butylenglycol ist, wenn der der Copolyester Polyethylenterephtalat ist.

3. Behälter nach Anspruch 1, **dadurch gekennzeichnet, dass** das Copolymer Terephthalsäure, Isophthalsäure oder Diethylenglycol, Propylenglycol, Spiroglycol oder Butylenglycol ist, wenn der Copolyester Polyethylenfuranoat (PEF) ist.

4. Behälter nach einem der vorangehenden Ansprüche, **dadurch gekennzeichnet, dass** der verstreckte Behälterkörper (21) eine Dichteerhöhung vor der Verschwei-ßung gegenüber dem unverstreckten Behälterhals (23) von weniger als 0,03 g/cm³ im Bereich der wenigstens einen Schweissnaht (17) aufweist.

5. Behälter nach einem der vorangehenden Ansprüche, **dadurch gekennzeichnet, dass** der Behälter eine Tube (11) mit einem Tubenhals (23) und einem dem Tubenhals (23) gegenüberliegenden Tubenende (37) ist, wobei die Austrittsöffnung (29) im Bereich des Tubenhalses (23) und die zweite Öffnung (40) im Bereich des Tubenendes (37) angeordnet ist und die zweite Öffnung (40) durch die Schweissnaht (17) versiegelt ist.

6. Behälter nach einem der Ansprüche 1 bis 4, **dadurch gekennzeichnet, dass** der Behälter (13) einen integralen Griff mit einer Durchgriffsöffnung (41) ausgebildet hat, wobei die Schweissnaht (17) die Durchgriffsöffnung (41) begrenzt, indem sie ein erstes und zweites an die Durchgriffsöffnung (41) angrenzendes Wandende verbindet.

7. Behälter nach einem der vorangehenden Ansprüche, **dadurch gekennzeichnet, dass** der Behälter (11,13) für einen vereinfachten Recycling Prozess einschichtig ausgebildet ist.

8. Behälter nach einem der vorangehenden Ansprüche, **dadurch gekennzeichnet, dass** das PET oder das PEF zur Herstellung des Behälters (11,13) zu einem Anteil von wenigstens 30% biobasiert oder zu 30% aus Regenerat hergestellt ist.

9. Behälter nach einem der vorangehenden Ansprüche, **dadurch gekennzeichnet, dass** die zweite Öffnung (40) des Behälters (11,13) unter Bildung einer Schweißnaht (17) in einem Temperaturbereich, welcher über der Glastemperatur (T_{G}) und unter der Schmelztemperatur (T_{M}) des Copolymers liegt, verschlossen ist.

10. Verfahren zur Herstellung eines aus einem Preform (19) gefertigtem Kunststoffbehälters (11,13) gemäß einem der vorangehenden Ansprüche 1 bis 10, wobei der Preform (19) aus Copolyester hergestellt ist und in einem Streckblasverfahren verstreckt wird, aufweisend die folgenden Herstellschritte:
- Streckblasen des Preforms (19), wobei wenigstens in dem Bereich in dem eine Schweissnaht (17) hergestellt wird, Wandungen des Preforms jeweils um wenigstens das 6 fache gegenüber dem unverstreckten Zustand vergrössert werden und die Dichte der Wandungen im verstreckten Bereich um höchstens 0,03 g/cm³ vergrössert wird,
- Aneinanderpressen der verstreckten Wandungen (25) und
- Verschweissen der Wandungen (25) unter Bildung der Schweissnaht (17) bei einer Schweisstemperatur zwischen der Glasübergangstemperatur (T_{G}) und der Schmelztemperatur (T_{M}) des Copolyesters.

11. Verfahren nach Anspruch 10, **dadurch gekennzeichnet, dass** durch die Verschweissung die Dichte der Wandungen (25) im Bereich der Schweißnaht (17) um höchstens 0,06 g/cm³ vergrössert wird.

12. Verfahren nach Anspruch 10 oder 11, **dadurch gekennzeichnet, dass** an dem Behälter (13) ein integraler Griff (15) mit einer Durchgriffsöffnung (41) ausgebildet wird und dass die Schweissnaht (17) die Durchgriffsöffnung (41) begrenzt, indem die Schweissnaht (17) die an die Durchgriffsöffnung (41) angrenzenden Wandungen (25) miteinander verbindet.

13. Verfahren nach einem der vorangehenden Ansprüche, **dadurch gekennzeichnet, dass** vor dem Aneinanderpressen und Verschweissen ein Teil des Behälters (11,13) abgetrennt bzw. abgeschnitten wird, wodurch eine Öffnung (40) entsteht und diese Öffnung (40) unter Bildung der Schweissnaht (17) bei einer Schweisstemperatur zwischen der Glasübergangstemperatur und der Schmelztemperatur des Copolyesters verschlossen wird.

14. Verfahren nach einem der vorangehenden Ansprüche, **dadurch gekennzeichnet, dass** die Schweisszeit, bei welcher die Wandungen (25) auf Schweisstemperatur gehalten werden, zwischen 1 und 6 sec beträgt.

15. Verfahren nach einem der vorangehenden Ansprüche, **dadurch gekennzeichnet, dass** die Wandungen (25) zwischen einer ersten und einer zweiten Schweissbacke miteinander verschweisst werden, wobei der Anpressdruck auf die Wandungenzwischen 50 und 50000 N/cm2 beträgt.

16. Verfahren nach einem der vorangehenden Ansprüche, **dadurch gekennzeichnet, dass** die Schweissbacken bei einer Abkühltemperatur geöffnet werden, welche Abkühltemperatur unter der Glasübergangstemperatur liegt.

17. Verfahren nach einem der vorangehenden Ansprüche, **dadurch gekennzeichnet, dass** das Copolyesters Polyethylenterephtalat (PET) mit einem Copolymergehalt zwischen 4 Gew% und 10 Gew% ist.

18. Verfahren nach einem der Ansprüche 10 bis 16, **dadurch gekennzeichnet, dass** das Copolyesters Polyethylenfuranoat (PEF) mit einem Copolymergehalt unter 5 Gew% ist.

19. Verfahren nach einem der vorangehenden Ansprüche, **dadurch gekennzeichnet, dass** zur Herstellung einer Tube (11) der Preform in einer entsprechenden Blasform streckgeblasen wird, nach der Entformung das dem Tubenhals (23) gegenüberliegende geschlossene Tubenende (37) abgeschnitten wird, die Tube (11) optional durch die beim Abschneiden des Tubenendes (37) entstehende zweite Öffnung (41) mit Füllgut befüllt wird und dass die zweite Öffnung (40) durch Schweißen verschlossen wird.

20. Verwendung eines Coplolyesters zur Herstellung eines Preforms (19), um aus diesem Preform (19) einen Behälter (11,13) in einem Streckblasverfahren zu fertigen, wobei der Behälter (11,13) einen Behälterkörper (21) und einen daran anschließenden Behälterhals (23) mit einer Austrittsöffnung (29) aufweist und wobei der Behälter (11,13) eine durch eine Schweissnaht (17) verschlossene zweite Öffnung (40) aufweist, **dadurch gekennzeichnet,**
**dass** das Copolyesters Polyethylenterephtalat (PET) mit einem Copolymergehalt zwischen 4 Gew% und 10 Gew% ist oder
**dass** das Copolyesters Polyethylenfuranoat (PEF) mit einem Copolymergehalt unter 5 Gew% ist und
**dass** die Oberfläche des Behälters (11,13) im Bereich der wenigstens einen Schweissnaht (17) gegenüber der Oberfläche des Preforms (19) ein Streckverhältnis von mehr als 6:1 aufweist und der Behälterkörper (21) nach dem Verschweissen eine Dichteerhöhung gegenüber dem Preformkörper (20) von weniger als 0,06 g/cm³ im Bereich der wenigstens einen Schweissnaht (17) aufweist.

21. Verwendung nach Anspruch20, **dadurch gekennzeichnet, dass** der Copolyester Polyethylenterephtalat (PET) mit einem Copolymergehalt zwischen 4 Gew% und 10 Gew% ist, wobei das Copolymer Isophthalsäure, Diethylenglycol, Furandicarbonsäure, Propylenglycol oder Butylenglycol ist.

22. Verwendung nach Anspruch 20, **dadurch gekennzeichnet, dass** der Copolyester Polyethylenfuranoat (PEF) mit einem Copolymergehalt unter 5 Gew% ist, wobei das Copolymer Terephthalsäure, Isophthalsäure oder Diethylenglycol, Propylenglycol, Spiroglycol oder Butylenglycol ist.

## Claims

1. A plastic container (11, 13) which is stretch blow-molded from a preform (19) and which comprises a container body (21) having a container neck (23) attached thereto, on which container neck (23) there is provided an outlet opening (29), wherein the container body (21) has a second opening (40) closed by a weld seam (17),
wherin
the container (11,13) is made from a copolyester,
the wall (25) of the stretched container body (21) has a stretching ratio relative to the wall of the unstretched container neck (23) in the region of the at least one weld seam (17) of more than 6:1, and
after the welding, the stretched container body (21) has a density increase relative to the unstretched container neck (23) in the region of the at least one weld seam (17) of less than 0.06 g/cm³,
**characterized in**
**that** the copolyester is polyethylene terephthalate (PET) having a copolymer content between 4 wt. % and 10 wt. %, or
**that** the copolyester is polyethylene furanoate (PEF) having a copolymer content below 5 wt. %.

2. The container according to claim 1, **characterized in that** the copolymer is isophthalic acid, diethylene glycol, furan dicarboxylic acid, propylene glycol, or butylene glycol if the copolyester is polyethylene terephthalate.

3. The container according to claim 1, **characterized in that** the copolymer is terephthalic acid, isophthalic acid or diethylene glycol, propylene glycol, spiroglycol or butylene glycol if the copolyester is polyethylene furanoate.

4. The container according to any one of the preceding claims, **characterized in that** the stretched container body (21) prior to welding shows a density increase relative to the unstretched container neck (23) of less than 0.03 g/cm³ in the region of the at least one weld seam (17).

5. The container according to any one of the preceding claims, **characterized in that** the container is a tube (11) having a tube neck (23) and a tube end (37) lying opposite the tube neck (23), wherein the outlet opening (29) is situated in the region of the tube neck (23) and the second opening (40) is situated in the region of the tube end (37) and the second opening (40) is sealed by the weld seam (17).

6. The container according to any one of claims 1 to 4, **characterized in that** the container (13) has an integral handle formed with a reach-through opening (41), wherein the weld seam (17) bounds off the reach-through opening (41) by joining a first and second wall end bordering on the reach-through opening (41).

7. The container according to any one of the preceding claims, **characterized in that** the container (11, 13) is designed as a single layer for an easier recycling process.

8. The container according to any one of the preceding claims, **characterized in that** the PET or the PEF for manufacturing the container (11, 13) is bio-based in a proportion of at least 30% or produced from as much as 30% regenerate.

9. The container according to any one of the preceding claims, **characterized in that** the second opening (40) of the container (11, 13) is closed by forming a weld seam (17) in a temperature range which is above the glass temperature (T_{G}) and below the melting temperature (T_{M}) of the copolymer.

10. A method for manufacturing a plastic container (11, 13) which is produced from a preform (19) according to any one of the preceding claims 1 to 10, wherein the preform (19) is produced from copolyester and is stretched in a stretch blow molding process, comprising the following manufacturing steps:
- stretch blow-molding of the preform (19), wherein walls of the preform are enlarged respectively by at least 6 times relative to the unstretched state at least in the region where a weld seam (17) is produced and the density of the walls in the stretched region is increased by at most 0.03 g/cm³,
- pressing together the stretched walls (25), and
- welding the walls (25) together to form the weld seam (17) at a welding temperature between the glass transition temperature (T_{G}) and the melting temperature (T_{M}) of the copolyester.

11. The method according to claim 10, **characterized in that** the density of the walls (25) in the region of the weld seam (17) is increased by at most 0.06 g/cm³ due to the welding.

12. The method according to claim 10 or 11, **characterized in that** an integral handle (15) with a reach-through opening (41) is formed on the container (13) and **in that** the weld seam (17) bounds off the reach-through opening (41) by joining together walls (25) bordering on the reach-through opening (41).

13. The method according to any one of the preceding claims, **characterized in that** a portion of the container (11, 13) is severed or cut off prior to the pressing together and welding together, thereby producing an opening (40), and this opening (40) is closed during the forming of the weld seam (17) at a welding temperature between the glass transition temperature and the melting temperature of the copolyester.

14. The method according to any one of the preceding claims, **characterized in that** the welding time during which the walls (25) are held at welding temperature is between 1 and 6 seconds.

15. The method according to any one of the preceding claims, **characterized in that** the walls (25) are welded together between a first and a second welding jaw, the pressing force against the walls being between 50 and 50000 N/cm2.

16. The method according to any one of the preceding claims, **characterized in that** the welding jaws are opened at a cooldown temperature, said cooldown temperature being below the glass transition temperature.

17. The method according to any one of the preceding claims, **characterized in that** the copolyester is polyethylene terephthalate (PET) having a copolymer content between 4 wt. % and 10 wt. %.

18. The method according to any one of claims 10 to 16, **characterized in that** the copolyester is polyethylene furanoate (PEF) having a copolymer content below 5 wt. %.

19. The method according to any one of the preceding claims, **characterized in that** the preform is stretch blow-molded in a corresponding blow mold for the production of a tube (11), after stripping from the mold, the closed tube end (37) situated opposite the tube neck (23) is cut off, the tube (11) is optionally filled with contents through the second opening (41) formed by cutting off the tube end (37), and the second opening (40) is closed by welding.

20. A use of a copolyester for production of a preform (19) in order to manufacture a container (11, 13) from this preform (19) in a stretch blow-molding process, wherein the container (11, 13) comprises a container body (21) and a container neck (23) attached thereto, having an outlet opening (29), and wherein the container (11, 13) has a second opening (40) closed by a weld seam (17), **characterized in that**
the copolyester is polyethylene terephthalate (PET) having a copolymer content between 4 wt. % and 10 wt. %, or
**in that** the copolyester is polyethylene furanoate (PEF) having a copolymer content below 5 wt. % and
that that the surface of the container (11, 13) in the region of the at least one weld seam (17) has a stretching ratio relative to the surface of the preform (19) of more than 6:1 and the container body (21) after the welding has a density increase in the region of the at least one weld seam (17) of less than 0.06 g/cm³ relative to the preform body (20).

21. The use according to claim 20, **characterized in that** the copolyester is polyethylene terephthalate (PET) having a copolymer content between 4 wt. % and 10 wt. %, wherein the copolymer is isophthalic acid, diethylene glycol, furan dicarboxylic acid, propylene glycol, or butylene glycol.

22. The use according to claim 20, **characterized in that** the copolyester is polyethylene furanoate (PEF) having a copolymer content below 5 wt. %, wherein the copolymer is terephthalic acid, isophthalic acid or diethylene glycol, propylene glycol, spiroglycol, or butylene glycol.

## Revendications

1. Récipient en matière plastique (11, 13) qui est formé par étirage-soufflage à partir d'une préforme (19) et qui présente un corps de récipient (11) suivi d'un col de récipient (23), col de récipient (23) sur lequel une ouverture de sortie (29) est prévue, cependant que le corps de récipient (21) présente une seconde ouverture (40) fermée par un cordon de soudure (17), cependant que le récipient (11, 13) est fabriqué en un copolyester,
la paroi (25) du corps de récipient étiré (21) présente, dans la région du au moins un cordon de soudure (17), un rapport d'étirage par rapport à la paroi du col de récipient non étiré (23) de plus de 6 :1 et
le corps de récipient étiré (21) présente une augmentation de densité, après la réalisation de la soudure, par rapport au col de récipient non étiré (23), de moins de 0,06 g/cm³ dans la région du au moins un cordon de soudure (17), **caractérisé en ce**
**que** le copolyester est du polyéthylène téréphtalate (PET) avec un taux de copolymère entre 4 % en poids et 10 % en poids ou
**que** le copolyester est du polyéthylène furanoate (PEF) avec un taux de copolymère inférieur à 5 % en poids.

2. Récipient selon la revendication 1, **caractérisé en ce que** le copolymère est de l'acide isophtalique, du diéhtylèneglycol, de l'acide furanedicarboxylique, du propylèneglycol ou du butylèneglycol si le copolyester est du polyéthylène téréphtalate.

3. Récipient selon la revendication 1, **caractérisé en ce que** le copolymère est de l'acide téréphtalique, de l'acide isophtalique ou du diéhtylèneglycol, du propylèneglycol, du spyroglycol ou du butylèneglycol si le copolyester est du polyéthylène furanoate (PEF).

4. Récipient selon l'une des revendications précédentes, **caractérisé en ce que** le corps de récipient étiré (21) présente une augmentation de densité, avant la soudure, par rapport au col de récipient non étiré (23), de moins de 0,03 g/cm³ dans la région du au moins un cordon de soudure (17).

5. Récipient selon l'une des revendications précédentes, **caractérisé en ce que** le récipient est un tube (11) avec un col de tube (23) et une extrémité de tube (37) opposée au col de tube (23), cependant que l'ouverture de sortie (29) est placée dans la région du col de tube (23) et la seconde ouverture (40) dans la région de l'extrémité de tube (37) et la seconde ouverture (40) est scellée par la soudure (17).

6. Récipient selon l'une des revendications 1 à 4, **caractérisé en ce que** le récipient (13) a configuré une poignée intégrale avec une ouverture de passage (41), cependant que le cordon de soudure (17) délimite l'ouverture de passage (41) en reliant une première et une seconde extrémité de paroi adjacente à l'ouverture de passage (41).

7. Récipient selon l'une des revendications précédentes, **caractérisé en ce que** le récipient est configuré monocouche pour un processus de recyclage simplifié.

8. Récipient selon l'une des revendications précédentes, **caractérisé en ce que** le PET ou le PEF pour la fabrication du récipient (11, 13) est fabriqué biosourcé pour une proportion d'au moins 30% ou de 30% de produit de régénération.

9. Récipient selon l'une des revendications précédentes, **caractérisé en ce que** la seconde ouverture (40) du récipient (11, 13) est fermée en formant un cordon de soudure (17) dans une plage de température qui est supérieure à la température de transition vitreuse (T_{G}) et inférieure à la température de fusion T_{M} du copolymère.

10. Procédé de fabrication d'un récipient en matière plastique (11, 13), fabriqué en une préforme (19) selon l'une des revendications précédentes 1 à 10, cependant que la préforme (19) est fabriquée en copolyester et est étirée dans un procédé d'étirage-soufflage, qui présente les étapes de fabrication suivantes :
- étirage-soufflage de la préforme (19), cependant que des parois de la préforme sont augmentées chacun d'au moins le 6^{ème} par rapport à l'état non étiré dans la région dans laquelle un cordon de soudure (17) est réalisé et la densité des parois est augmentée de 0,03 g/cm³ au maximum dans la région étirée,
- pression des paroi étirées (25) l'une contre l'autre et
- soudure des parois (25) en formant le cordon de soudure (17) à une température de soudure entre la température de transition vitreuse (T_{G}) et la température de fusion T_{M} du copolyester.

11. Procédé selon la revendication 10, **caractérisé en ce que** la densité des parois (25) est augmentée par la soudre de 0,06 g/cm³ au maximum dans la région du cordon de soudure (17).

12. Procédé selon la revendication 10 ou 11, **caractérisé en ce qu'**une poignée intégrale (15) avec une ouverture de passage (41) est configurée sur le récipient (13) et que le cordon de soudure (17) délimite l'ouverture de passage (41) **en ce que** le cordon de soudure (17) relie les parois (25) adjacentes à l'ouverture de passage (41) l'une à l'autre.

13. Procédé selon l'une des revendications précédentes, **caractérisé en ce qu'**avant la pression de contact et la soudure une partie du récipient (11, 13) est séparée ou coupée si bien qu'il se forme une ouverture (40) et cette ouverture (40) est fermée en formant le cordon de soudure (17) à une température de soudure entre la température de transition vitreuse et la température de fusion du copolyester.

14. Procédé selon l'une des revendications précédentes, **caractérisé en ce que** le temps de soudure pendant lequel les parois (25) sont maintenues à la température de soudure est entre 1 et 6 secondes.

15. Procédé selon l'une des revendications précédents, **caractérisé en ce que** les parois (25) sont soudées l'une à l'autre entre une première et une seconde mâchoire de soudage, la pression de contact sur les parois étant entre 50 et 50000 N/cm².

16. Procédé selon l'une des revendications précédentes, **caractérisé en ce que** les mâchoires de soudage s'ouvrent à une température de refroidissement, laquelle température de refroidissement se situe sous la température de transition vitreuse.

17. Procédé selon l'une des revendications précédentes, **caractérisé en ce que** le copolyester est du polyéthylène téréphtalate (PET) avec un taux de copolymère entre 4 % en poids et 10 % en poids.

18. Procédé selon l'une des revendications précédentes, **caractérisé en ce que** le copolyester est du polyéthylène furanoate (PEF) avec un taux de copolymère inférieur à 5 % en poids.

19. Procédé selon l'une des revendications précédentes, **caractérisé en ce que**, pour la fabrication d'un tube (11), la préforme est étirée dans un moule de soufflage correspondant, après démoulage l'extrémité du tube (37) opposée au col du tube (23) est coupée, le tube (11) est en option rempli de matière de remplissage par la seconde ouverture (41) qui se forme lors de la coupe de l'extrémité du tube (37) et que la seconde ouverture (40) est fermée par soudage.

20. Utilisation d'un copolyester pour la fabrication d'une préforme (19) pour fabriquer un récipient (11, 13) dans un procédé d'étirage-soufflage à partir de cette préforme (19), cependant que le récipient (11, 13) présente un corps de récipient (21) et un col de récipient (23) qui suit avec une ouverture de sortie (29) et cependant que le récipient (11, 13) présente une seconde ouverture (40) fermée par un cordon de soudure, **caractérisée en ce**
**que** le copolyester est du polyéthylène téréphtalate (PET) avec un taux de copolymère entre 4 % en poids et 10 % en poids ou
**que** le copolyester est du polyéthylène furanoate (PEF) avec un taux de copolymère inférieur à 5 % en poids et
**que** la surface du récipient (11, 13) présente, dans la région du au moins un cordon de soudure (17), un rapport d'étirage par rapport à la surface de la préforme (19) de plus de 6:1 et le corps de récipient étiré présente une augmentation de densité, après la réalisation de la soudure, par rapport au corps de la préforme (20), de moins de 0,06 g/cm³ dans la région du au moins un cordon de soudure (17).

21. Utilisation selon la revendication 20, **caractérisée en ce que** le copolyester est du polyéthylène téréphtalate (PET) avec un taux de copolymère entre 4 % en poids et 10 % en poids, cependant que le copolymère est de l'acide isophtalique, du diéhtylèneglycol, de l'acide furanedicarboxylique, du propylèneglycol ou du butylèneglycol.

22. Utilisation selon la revendication 20, **caractérisée en ce que** le copolyester est du polyéthylène furanoate (PEF) avec un taux de copolymère inférieur à 5 % en poids, cependant que le copolymère est de l'acide téréphtalique, de l'acide isophtalique ou du diéhtylèneglycol, du propylèneglycol, du spyroglycol ou du butylèneglycol.
